# EUROPEAN PATENT SPECIFICATION

(11) **EP 3 546 437 B1**
(45) Date of publication and mention of the grant of the patent: **14.09.2022**
(21) Application number: 17873848.0
(22) Date of filing: 14.11.2017
(51) Int. Cl.: C04B 41/80, C04B 35/443, C04B 35/486, C04B 35/645

(54) **METHOD FOR PLASTICALLY FORMING CERAMIC**
VERFAHREN ZUR PLASTISCHEN VERFORMUNG VON KERAMIK
PROCÉDÉ DE FORMATION PLASTIQUEMENT DE CÉRAMIQUE

(30) Priority: 22.11.2016 JP 2016226977
(43) Date of publication of application: 02.10.2019
(73) Proprietor: National Institute for Materials Science, Tsukuba-shi, Ibaraki 305-0047 (JP)
(72) Inventor: YOSHIDA, Hidehiro, Tsukuba-shi Ibaraki 305-0047 (JP); SASAKI, Yamato, Tsukuba-shi Ibaraki 305-0047 (JP)
(74) Representative: Markfort, Iris-Anne Lucie
(86) International application number: PCT/JP2017/040873
(87) International publication number: WO 2018/096974

(56) References cited:
- JP-A- S5 331 555
- JP-A- H09 194 257
- JP-A- S62 234 381
- US-A1- 2007 132 154
- US-A1- 2013 085 055
- HANS CONRAD ET AL: "Effect of an Alternating Current Electric Field on the Plastic Deformation of Ultrafine-Grained 3Y-TZP at 1400 °C and 1500 °C", METALLURGICAL AND MATERIALS TRANSACTIONS A, SPRINGER-VERLAG, NEW YORK, vol. 39, no. 2, 28 December 2007 (2007-12-28), pages 272-278, XP019696068, ISSN: 1543-1940
- HULBERT ET AL: "A low-temperature high-strain-rate formable nanocrystalline superplastic ceramic", SCRIPTA MATERIALIA, ELSEVIER, AMSTERDAM, NL, vol. 56, no. 12, 20 April 2007 (2007-04-20), pages 1103-1106, XP022036907, ISSN: 1359-6462, DOI: 10.1016/J.SCRIPTAMAT.2007.02.003
- SHEN Z ET AL: "Formidable increase in the superplasticity of ceramics in the presence of an electric field", ADVANCED MATERIALS, WILEY-VCH GERMANY, DE, vol. 15, no. 12, 17 June 2003 (2003-06-17) , pages 1006-1009, XP002529289, ISSN: 0935-9648, DOI: 10.1002/ADMA.200304863
- YANG DI ET AL: "Retardation of grain growth and cavitation by an electric field during superplastic deformation of ultrafine-grained 3Y-TZP at 1,450-1,600 °C", JOURNAL OF MATERIALS SCIENCE, KLUWER ACADEMIC PUBLISHERS, DORDRECHT, vol. 43, no. 13, 1 July 2008 (2008-07-01), pages 4475-4482, XP036668024, ISSN: 0022-2461, DOI: 10.1007/S10853-008-2653-7 [retrieved on 2008-07-01]
- CONRAD H ET AL: "Plastic deformation of ultrafine-grained 2.5Y-TZP exposed to a dc electric field with an air gap", MATERIALS SCIENCE AND ENGINEERING: A, ELSEVIER, AMSTERDAM, NL, vol. 496, no. 1-2, 25 November 2008 (2008-11-25), pages 9-13, XP025432746, ISSN: 0921-5093, DOI: 10.1016/J.MSEA.2008.07.012 [retrieved on 2008-07-22]
- DI Y ET AL: "Influence of an electric field on the superplastic deformation of 3Y-TZP", SCRIPTA MATERIALIA, ELSEVIER, AMSTERDAM, NL, vol. 36, no. 12, 15 June 1997 (1997-06-15) , pages 1431-1435, XP004324617, ISSN: 1359-6462, DOI: 10.1016/S1359-6462(97)00045-6
- CONRAD, HANS ET AL.: 'Effect of an Alternating Current Electric Field on the Plastic Deformation of Ultrafine-Grained 3Y-TZP at 1400°C and 1500°C' METALLURGICAL AND MATERIALS TRANSACTIONS A vol. 39, no. 2, February 2008, pages 272 - 278, XP019696068

## Description

### Technical Field

The present invention relates to a method of performing deformation processing on a ceramic. More specifically, the present invention relates to a method of performing deformation processing on a ceramic at a low temperature in a short time.

### Background Art

A ceramic polycrystalline dense body has features such as high strength, a high shear modulus, corrosion resistance, and ion conductivity, and thus is used as various heat resistant materials, structural members, battery electrolytes, or the like. However, because a ceramic is brittle, it is difficult to perform deformation processing thereon. A technology is known for performing deformation processing on such a ceramic polycrystalline dense body at a high temperature (see, for example, Patent Literature 1).

Japanese Patent Application Laid-open No. 2004-107156 discloses that deformation processing is performed on a sintered ceramic body at a temperature of not less than 1300°C. The sintered ceramic body consists of zirconia matrix in which one or more spinel phases with the general formula MgAl₂O₄, MnAl₂O₄, or TiMn₂O₄ are uniformly dispersed, the zirconia phase and the spinel phases occupy not less than 80% of volume fraction of the sintered body, and the sintered body has an average grain size of not more than 2.0 µm.

However, the operation temperature for the deformation processing is as high as not less than 1300°C and the strain rate is as slow as not less than 1×10⁻⁴S⁻¹, which has hindered industrial practical use. Since the ceramic in Patent Literature 1 is a zirconia superplastic ceramic, a technology for easy deformation processing even on an arbitrary ceramic at a low temperature in a short time is desired.

HANS CONRAD ET. AL: "Effect of an Alternating Current Electric Field on the Plastic Deformation of Ultrafine-Grained 3YT-TZP at 1400°C and 1500°C", METALLURGICAL AND MATERIALS TRANSACTIONS A, SPRINGER-VERLAG, NEW YORK, vol. 39, no. 2, 28 December 2007 (2007-12-28), pages 272-278, XP019696068, ISSN: 1543-1940 discloses information on the effects of an alternating current electrical field on the plastic deformation of ultrafine-grained 3YT-TZP at the specific temperatures of 1400°C and 1500°C.

Moreover, US 2007/132154 A1 discloses that ceramic materials are found to be capable of superplastic forming at moderate temperatures with a high strain rate when the forming is performed in the presence of an electric current such as that produced by spark plasma sintering.

Furthermore, US 2013/085055 A1 discloses methods of flash sintering and composition created by these methods.

Finally, HULBERT ET AL: "A low-temperature high-strain-rate formable nanocrystalline superplastic ceramic", SCRIPTA MATERIALIA, ELSEVIER; AMSTERDAM; NL, vol. 56, no. 12, 20 April 2007 (2007-04-20), pages 1103-1106, XP022036907, ISSN: 1359-6462, DOI: 10.1016/J. SCRIPTAMAT.2007.02.003 refers to the specific material of a piezoelectric ceramic.

### Disclosure of Invention

### Technical Problem

It is an object of the present invention to provide a method of performing deformation processing on a ceramic at a low temperature in a short time.

### Solution to Problem

A method of performing deformation processing on a ceramic according to the present invention includes the steps as mentioned in claim 1, thereby solving the above-mentioned problem.

The step of heating may include heating the ceramic within a temperature range of not less than 800°C and not more than 1200°C.

The step of heating may include heating the ceramic within a temperature range of not less than 800°C and not more than 1000°C.

The step of applying a voltage may include applying a direct current electric field to the ceramic within a range of not less than 50 V/cm and not more than 1500 V/cm.

The step of applying a voltage may include applying a direct current electric field to the ceramic within a range of not less than 100 V/cm and not more than 200 V/cm.

The step of applying a voltage may include applying an alternating electric field to the ceramic within a range of not less than 5 V/cm and not more than 200 V/cm at a frequency within a range of not less than 1 Hz and not more than 60 Hz. The step of applying a voltage may include applying an alternating electric field to the ceramic within a range of not less than 15 V/cm and not more than 60 V/cm at a frequency within a range of not less than 3 Hz and not more than 20 Hz.

The step of applying a voltage may include applying a current density of not less than 100 mA/mm² and not more than 300 mA/mm² to the ceramic.

The step of applying a voltage may include applying a current density of not less than 200 mA/mm² and not more than 270 mA/mm² to the ceramic.

The step of applying a stress includes applying a stress with a strain rate of not less than 1×10⁻³s⁻¹ and not more than 1×10⁻¹s⁻¹ to the ceramic.

The ceramic may be polycrystalline selected from the group consisting of an oxide, a nitride, a carbide, and an oxynitride having a grain size of not less than 100 nm and not more than 1 µm.

The step of applying a stress includes applying a stress selected from the group consisting of a tensile stress and a compressive stress to the ceramic.

The step of applying a voltage includes applying a voltage while controlling a current density flowing through the ceramic in such a way that the stress to be applied to the ceramic by the step of applying a stress is constant.

The step of applying a stress may be performed after applying the voltage to the ceramic for more than zero second and not more than 60 seconds in the step of applying a voltage.

The step of applying a stress may include applying a deformation stress to the ceramic within a range of not less than 5 MPa and not more than 150 MPa.

The step of applying a stress may include applying a deformation stress to the ceramic within a range of not less than 5 MPa and not more than 15 MPa.

An apparatus that performs deformation processing on a ceramic according to the present technology includes: a stress application means that applies a stress to the ceramic, the ceramic being placed on the stress application means; a heating means that heating the ceramic; and a power source that applies a voltage to the ceramic, thereby solving the above-mentioned problem.

The apparatus may further include a control unit that controls at least an operation of the power source, in which the control unit may control the operation of the power source in such a way that the stress applied by the stress application means is constant, or control the operation of the power source in such a way that the voltage is constant on a basis of an amount of strain that has occurred in the ceramic by the stress application means.

The stress application means apply a stress selected from the group consisting of a tensile stress and a compressive strength to the ceramic.

The power source may be a direct current power source or an alternating current power source.

The heating means may be selected from the group consisting of resistance heating, infrared heating, and combustion heating.

### Advantageous Effects of Invention

The deformation processing method according to the present invention includes: a heating step; a voltage application step; and a stress application step. Since the ceramic becomes an atomic diffusion self-accelerated state by the heating step and the voltage application step, applying a stress in this state makes it possible to perform deformation processing at a high strain rate (i.e., in a short time). Since the heating can cause the atomic diffusion self-accelerated state to occur as long as the heating temperature is higher than 700°C, it is possible to perform deformation processing at a low temperature of not more than 1000°C.

A deformation processing apparatus to perform the deformation processing on a ceramic according to the present invention includes: a stress application means; a heating means; and a power source. Moreover, a control unit is provided that controls at least an operation of the power source in accordance with the method of the present invention. With such a configuration, it is possible to perform deformation processing in a short time by causing a ceramic to be in an atomic diffusion self-accelerated state even at a low temperature of not more than 1000°C.

### Brief Description of Drawings

Fig. 1 is a diagram showing a flowchart of performing deformation processing on a ceramic according to the present invention.
Fig. 2 is a diagram showing an apparatus for performing the inventive deformation processing method.
Fig. 3 is a diagram showing a tensile specimen.
Fig. 4 is a schematic diagram showing a deformation processing apparatus used in Example.
Fig. 5 is a diagram showing a relationship between nominal strain and a deformation stress (stress-strain curve) at the time of performing a tensile test (strain rate of 1.0×10⁻³s⁻¹) by Example 1.
Fig. 6 is a diagram showing another relationship between nominal strain and a deformation stress (stress-strain curve) at the time of performing a tensile test (strain rate of 2.0×10⁻³s⁻¹) by Example 1.
Fig. 7 is a diagram showing a relationship (stress-strain curve) between nominal strain and a deformation stress at the time of performing a tensile test by Example 2.
Fig. 8 is a diagram showing a relationship (stress-strain curve) between nominal strain and a deformation stress at the time of performing a tensile test by Example 3.
Fig. 9 is a diagram showing a relationship (stress-strain curve) between nominal strain and a deformation stress at the time of performing a tensile test by Comparative Example 4.
Fig. 10 is a diagram showing a state of a specimen before and after a tensile test by Example 1.
Fig. 11 is a diagram showing a state of a specimen after a tensile test by Comparative Example 5.
Fig. 12 is a diagram showing a current density and a change in a voltage at the time of performing a tensile test by Example 1.
Fig. 13 is a diagram showing a relationship between elongation to failure and an average grain diameter with respect to a current density at the time of performing a tensile test by Example 1.
Fig. 14 is a diagram showing a relationship between a deformation stress and elongation to failure at the time of performing tensile tests by Example 1 and Example 2.
Fig. 15 is a diagram showing a transition time until reaching an atomic diffusion self-accelerated state by Example 6.
Fig. 16 is a diagram showing a relationship (stress-strain curve) between nominal strain and a deformation stress at the time of performing tensile tests by Examples 7 to 9.
Fig. 17 is a diagram showing a relationship (stress-strain curve) between nominal strain and a deformation stress at the time of performing a tensile test by Example 10.
Fig. 18 is a diagram showing a relationship (stress-strain curve) between nominal strain and a deformation stress at the time of performing a tensile test by Example 10. Mode(s) for Carrying Out the Invention

Hereinafter, embodiments of the present technology will be described with reference to the drawings. Note that similar components will be denoted by similar reference symbols, and description thereof will be omitted.

The present inventors have found that a ceramic becomes an atomic diffusion self-accelerated state by heating a ceramic and applying a voltage to the ceramic, and applied this to deformation processing to complete the present invention. In the present specification, the term "atomic diffusion self-accelerated state" represents the state in which atomic diffusion has been accelerated much more than normal atomic diffusion determined by the temperature in a ceramic. Note that in the present specification, it is determined when a voltage is applied to the ceramic, a predetermined current value is achieved, and the ceramic is plastically-deformed, that the ceramic has become an atomic diffusion self-accelerated state. For example, in the case where the ceramic is yttria-stabilized zirconia, the ceramic is surely plastically deformed when a voltage is applied thereto and 250 mA/mm² is achieved. Therefore, it can be determined that it has become an atomic diffusion self-accelerated state when 250 mA/mm² as a predetermined current value is achieved.

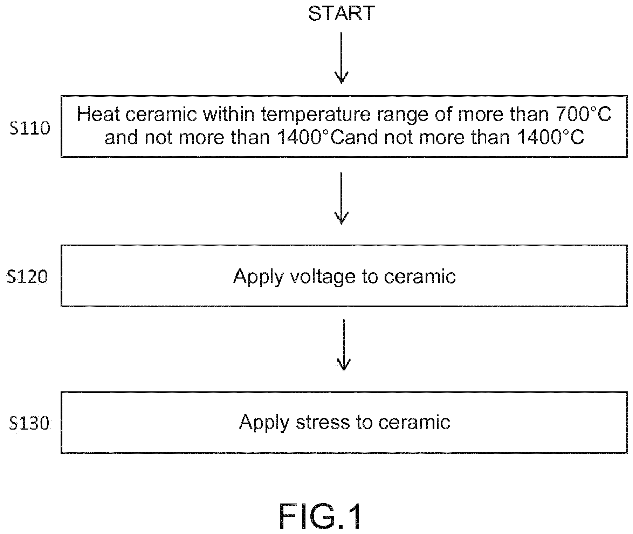

Fig. 1 is a diagram showing a flowchart of performing deformation processing on a ceramic according to the present invention.

Examples of the material of the ceramic used in the present invention include, but not particularly limited to, polycrystals selected from the group consisting of an oxide, a nitride, a carbide, and an oxynitride. Examples of the oxide ceramic include, but not limited to, a zirconia ceramic typified by yttria-stabilized zirconia (Y₂O₃-stabilized tetragonal ZrO₂), a composite ceramic typified by ZrO₂-Al₂O₃-MgAl₂O₄, and an alumina ceramic (Al₂O₃). Examples of the nitride ceramic include, but not limited to, Si₃N₄, SiAlON, AlN, and TiN. Examples of the carbide ceramic include, but not limited to, SiC, TiC, B₄C, and ZrC. The oxynitride ceramic represents a nitride ceramic containing oxygen. In particular, it is favorable that the ceramic includes crystal grains each having a grain diameter in the range of not less than 100 nm and not more than 1 µm. As a result, it is possible to cause an atomic diffusion self-accelerated state to uniformly occur throughout the entire ceramic by the process to be described later to promote deformation processing.

Step S110: A ceramic is heated within a temperature range of more than 700°C and not more than 1400°C. In the case where the heating temperature is not more than 700°C, the ceramic does not become an atomic diffusion self-accelerated state, and deformation processing cannot be performed in some cases. In the case where the heating temperature is more than 1400°C, although deformation processing can be performed, a special apparatus such as a high-temperature furnace is required for heating, which is not favorable. More favorably, the ceramic is heated within a temperature range of not less than 800°C and not more than 1200°C. In this range, it is possible to perform deformation processing on the ceramic at a relatively low temperature. Further favorably, the ceramic is heated within a temperature range of not less than 800°C and not more than 1000°C. This makes it possible to perform the deformation processing at a low temperature of not more than 1000°C. Therefore, an ordinary furnace can be used, which is industrially advantageous.

Step S120: A voltage is applied to the ceramic heated in Step S110. As a result, the ceramic becomes an atomic diffusion self-accelerated state, and thus deformation processing can be performed. Step S120 is performed simultaneously with Step S110. In this meaning, these Steps may be performed simultaneously by performing Step S120 first and then performing Step S110. The voltage may be a direct current voltage using a direct current power source, or an alternating current voltage using an alternating current power source.

Favorably, a direct current electric field in the range of not less than 50 V/cm and not more than 1500 V/cm is applied to the ceramic. As a result, it is possible to cause the ceramic to be in an atomic diffusion self-accelerated state. In the case of a direct current electric field of less than 50 V/cm, it takes a considerable time (e.g., not less than one minute) to cause the ceramic to be in an atomic diffusion self-accelerated state, which is not realistic. In the case where a direct current electric field of more than 1500 V/cm is applied, there is a possibility that discharge occurs.

More favorably, a direct current electric field in the range of more than 100V/cm and not more than 200V/cm is applied to the ceramic. As a result, it is possible to surely cause the ceramic to be in an atomic diffusion self-accelerated state.

Alternatively, an alternating electric field in the range of not less than 5 V/cm and not more than 200 V/cm may be applied to the ceramic at a frequency in the range of not less than 1 Hz and not more than 60 Hz. As a result, unlike the direct current voltage, it is possible to cause the ceramic to be in an atomic diffusion self-accelerated state even in a small electric field. Further favorably, an alternating electric field in the range of not less than 15 V/cm and not more than 60 V/cm may be applied to the ceramic at a frequency in the range of not less than 3 Hz and not more than 20 Hz. As a result, break strain larger than that in the case of application of a direct current voltage is achieved.

Favorably, a current density in the range of not less than 100 mA/mm² and not more than 300 mA/mm² is applied to the ceramic. As a result, it is possible to surely cause the ceramic to be in an atomic diffusion self-accelerated state.

Favorably, a current density in the range of not less than 200mA/mm² and not more than 270 mA/mm² is applied to the ceramic. As a result, a large effect of the atomic diffusion self-accelerated state of the ceramic is achieved, and deformation processing can be performed even in a small deformation stress.

It is favorable to apply a voltage to the ceramic for a time more than zero second and not more than 60 seconds. As a result, it is possible to surely cause the ceramic to be in an atomic diffusion self-accelerated state. Further favorably, the application is performed for not less than five seconds and not more than 20 seconds. As a result, it is possible to cause the ceramic to be in an atomic diffusion self-accelerated state with a relatively low electric field in a short time.

In the step of applying a voltage, a voltage is applied while controlling the current density so that the stress to be applied to the ceramic is constant in the step (Step S130) of applying a stress, which will be described later. That is, although the current density can change during the deformation processing of the ceramic, by controlling the current density so that the stress is constant, it is possible to perform deformation processing on the ceramic with good controllability. For example, in the case where the stress is a tensile stress, because a current density flowing through the ceramic increases as the deformation processing progresses, it is possible to perform deformation processing on the ceramic with good yield and high precision by appropriately reducing the current density so that the stress is constant. The opposite is true in the case where the stress is a compressive stress.

Step S130: A stress is applied to the ceramic heated in Step S110, to which the voltage has been applied in Step S120. As a result, since the stress is applied to the ceramic that has become an atomic diffusion self-accelerated state through Step S110 and Step S120, which makes it possible to perform deformation processing at a high strain rate, i.e., in a short time. Here, Step S130 is performed simultaneously with Step S110 and S120. As the stress, a stress selected from the group consisting of a tensile stress and a compressive stress is applied. As a result, it is possible to perform deformation processing on the ceramic to have a desired shape.

A stress is applied to the ceramic at a strain rate of not less than 1×10⁻³s⁻¹ and not more than 1×10⁻¹s⁻¹. By applying a stress at such a high strain rate, it is possible to perform deformation processing in a short time, which is advantageous.

Favorably, a deformation stress in the range of not less than 5 MPa and not more than 150 MPa is applied to the ceramic. In the case of a deformation stress less than 5 MPa, deformation processing is not sufficiently performed on the ceramic in some cases. In the case where the deformation stress exceeds 150 MPa, although deformation processing of the ceramic can be performed, a special apparatus is required. More favorably, a deformation stress in the range of not less than 5 Ma and not more than 15 MPa is applied to the ceramic. This makes it possible to perform deformation processing even with a small deformation stress, which is advantageous.

Steps S110 to S130 are performed in the atmosphere, in vacuum, in an inert gas, or the like. For example, in the case where the ceramic is an oxide, the atmosphere is favorable. In the case where the ceramic is a nitride, vacuum or an inert gas is favorable.

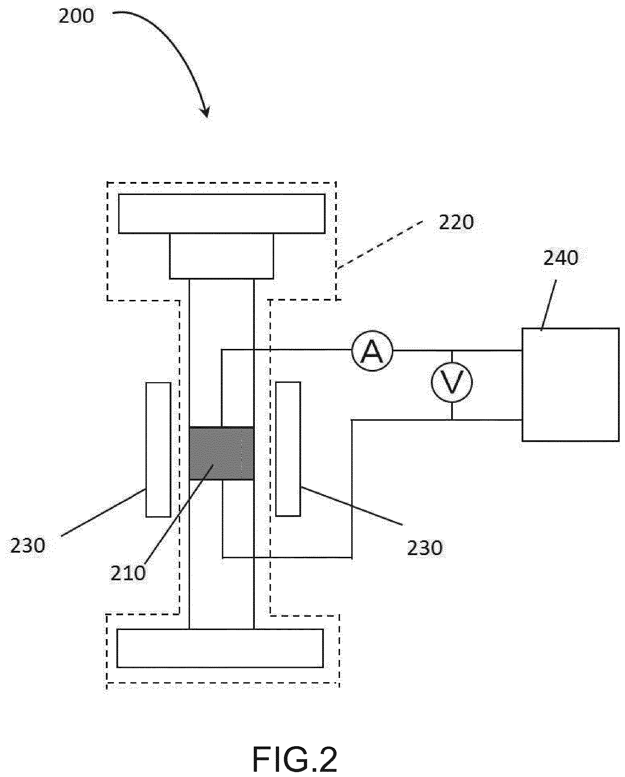

Fig. 2 is a diagram showing an apparatus for performing the inventive deformation processing method on the ceramic.

A deformation processing apparatus 200 includes a stress application means 220 on which a ceramic 210 is placed, which applies a stress to the ceramic 210, a heating means 230 that heats the ceramic 210, and a power source 240 that applies a voltage to the ceramic 210. With such a configuration, the method of performing deformation processing on a ceramic according to the present invention described with reference to Fig. 1 is implemented, and it is possible to perform deformation processing in a short time by causing the ceramic to be in an atomic diffusion self-accelerated state even at a low temperature of not more than 1000°C.

The stress application means 220 applies a stress selected from the group consisting of a tensile stress and a compressive stress to the ceramic 210. The stress application means 220 may include a jig so that the ceramic can be placed thereon.

As the heating means 230, an arbitrary means can be adopted as long as it is capable of heating the ceramic 210 to the temperature in the range of more than 700°C and not more than 1400°C. Examples thereof include a heating means selected from the group consisting of resistance heating, infrared heating, and combustion heating. An example of the resistance heating is an electric furnace, an example of the infrared heating is an image furnace, and an example of the combustion heating is a gas furnace. These heating means can be readily available, and a deformation processing apparatus can be established.

As the power source 240, a direct current power source capable of applying a direct current electric field of not less than 50 V/cm and not more than 1500 V/cm to the ceramic 210, or an alternating current power source capable of applying an alternating electric field in the range of not less than 5 V/cm and not more than 200 V/cm at a frequency in the range of not less than 1 Hz and not more than 60 Hz is adopted. The power source 240 includes a voltmeter and an ammeter so that values of the voltage and current applied to the ceramic 210 can be measured.

The deformation processing apparatus 200 may further include a control unit (not shown) that controls at least the operation of the power source 240. The control unit controls the operation of the power source 240 to change the current and voltage so that the stress to be applied to the ceramic 210 by the stress application means 220 is constant. Specifically, in the case where the stress application means 220 applies a tensile stress to the ceramic 210, the control unit controls the power source 240 to change the voltage and reduce the current. In the case where the stress application means 220 applies a compressive stress, the opposite control. Alternatively, the control unit may control, on the basis of the amount of strain that has occurred in the ceramic 210 by the stress application means 220, the operation of the power source 240 so that the voltage is constant. In this case, since the amount of strain is calculated, it is possible to perform control with higher precision.

The deformation processing apparatus 200 may be provided in an atmosphere-controllable chamber, or the heating means itself may include a heatable chamber. As a result, it is possible to perform deformation processing on the ceramic 210 not only in the atmosphere but also in vacuum and in an inert gas.

Deformation processing of a ceramic using the deformation processing apparatus 200 according to the present invention will be described. The ceramic 210 on which deformation processing is to be performed by the deformation processing apparatus 200 is placed. Subsequently, the ceramic 210 is heated by a heating means 220 (Step S110 in Fig. 1). A voltage is applied to the ceramic 210 by the power source 240 while heating the ceramic 210 (Step S120 in Fig. 1). The heating and voltage cause the ceramic 210 to be in an atomic diffusion self-accelerated state. Subsequently, the stress application means 220 applies a stress to the ceramic (Step S130 in Fig. 1). In this way, the ceramic 210 performs deformation processing.

Next, the present invention will be described in detail with specific Examples. It should be noted that the present invention is not limited to these Examples.

### Example

### [Example 1]

In Example 1, as a ceramic, 3mol% Y₂O₃-stabilized tetragonal ZrO₂ polycrystalline body widely used as a ceramic having high strength and toughness was used, and deformation processing was performed in the atmosphere with the heating temperature of 1000°C, various current densities (80, 100, 200, 235, 250, 270, 300 mA/mm²), an initial voltage of 120 V/cm, and a strain rate of 1.0×10⁻³s⁻¹, 2.0×10⁻³s⁻¹.

The 3mol% Y₂O₃-stabilized tetragonal ZrO₂ (Y-TZP) polycrystalline body was obtained by press-molding a 3mol% Y-TZP powder (manufactured by TOSOH CORPORATION, TZ-3Y grade) manufactured by a hydrolysis method and then sintering it in the atmosphere without pressurization for two hours at 1400°C. The relative density of the Y-TZP polycrystalline body was not less than 95% (Archimedes method), and it was a dense body.

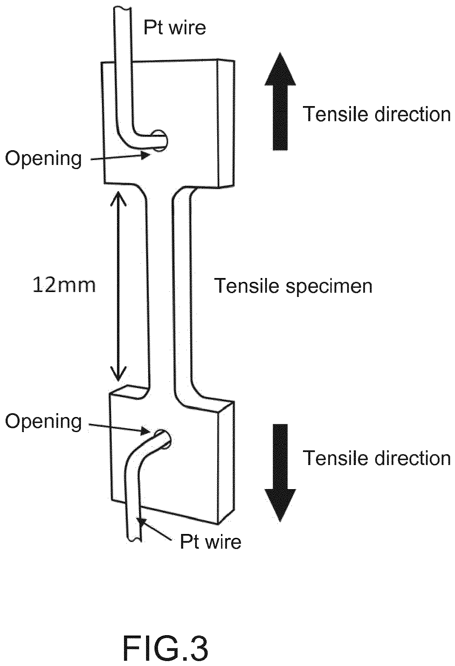

A tensile specimen was obtained by grinding from the Y-TZP polycrystalline body. The tensile specimen is schematically shown in Fig. 3.

Fig. 3 is a diagram showing the tensile specimen.

The specimen had a gauge part length of 12 mm and a cross-sectional dimension of 2.2×2.2 mm². In order to apply a voltage to the specimen, a hole of ϕ1 mm to 1.5 mm was opened, and a platinum wire (Pt wire) of ϕ1 mm to 1.5 mm was passed therethrough.

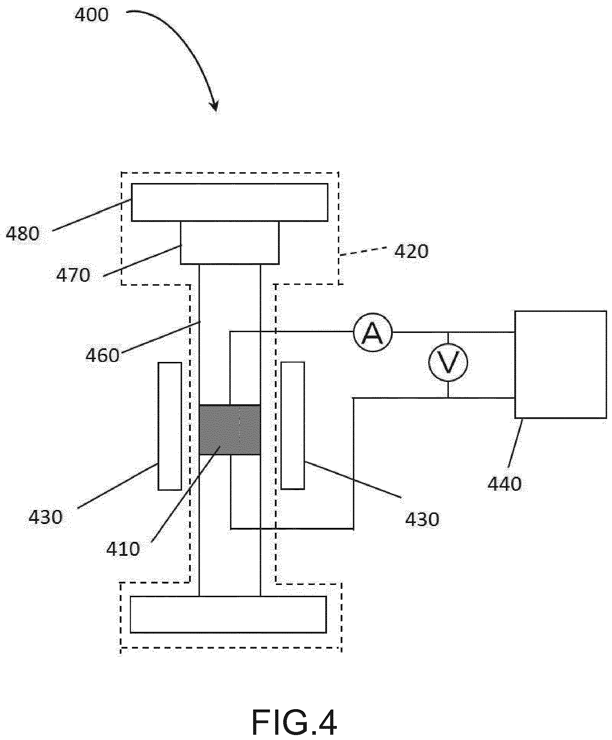

Fig. 4 is a schematic diagram showing a deformation processing apparatus used in the Examples.

A deformation processing apparatus 400 included a stress application means 420 on which a tensile specimen 410 was placed, which applied a stress to the tensile specimen 410, a heating means 430 that heated the tensile specimen 410, a power source 440 that applied a voltage to the tensile specimen 410.

The stress application means 420 included a jig 460 that fixed the tensile specimen 410, a load measuring device 470 that measured a stress to be applied to the tensile specimen 410, and a jig driving mechanism 470 that pulled the jig 460.

The heating means 430 was a resistance heating electric furnace. The power source 440 was a high-voltage direct current power source (manufactured by MATSUSADA PRECISION Inc., HAR-3P100), and adopted a control method in which the applied voltage was maintained when the current value is low and the voltage was reduced so as to maintain the current value when it reaches the maximum current. Such a control method was performed by the control unit (not shown).

In the atmosphere, the tensile specimen 410 was heated by the heating means 430 from room temperature to 1000°C at a heating rate of 10°C per minute (Step S110 in Fig. 1). While heating, direct current voltages of 120 V/cm and various current densities (80, 100, 200, 235, 250, 270, and 300 mA/mm²) were applied to the tensile specimen 410 (Step S120 in Fig. 1). A tensile stress was applied to the tensile specimen 410 at the strain rate of 1.0×10⁻³s⁻¹, 2.0×10⁻³s⁻¹ while heating and applying the voltage (Step S130 in Fig. 1).

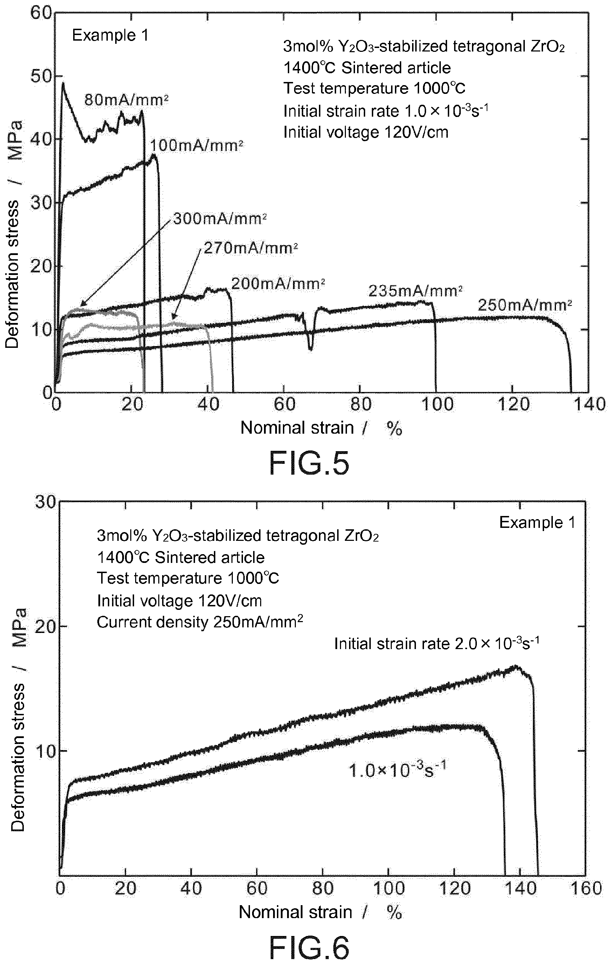

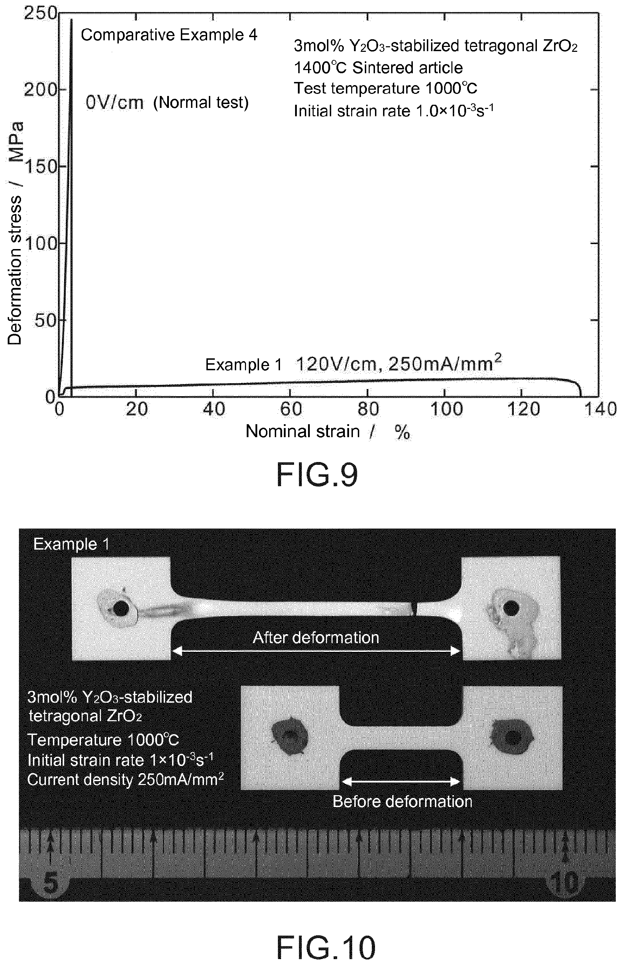

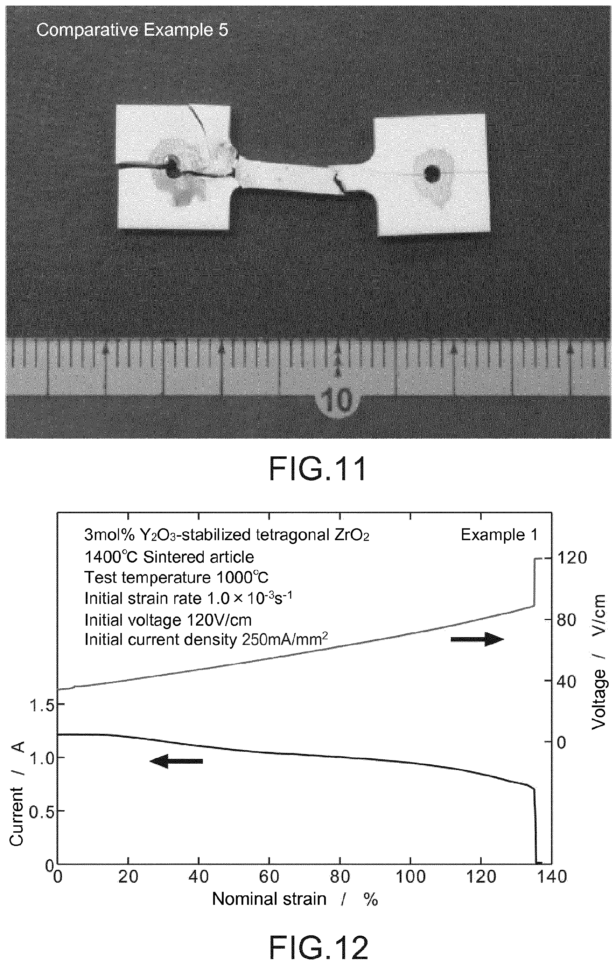

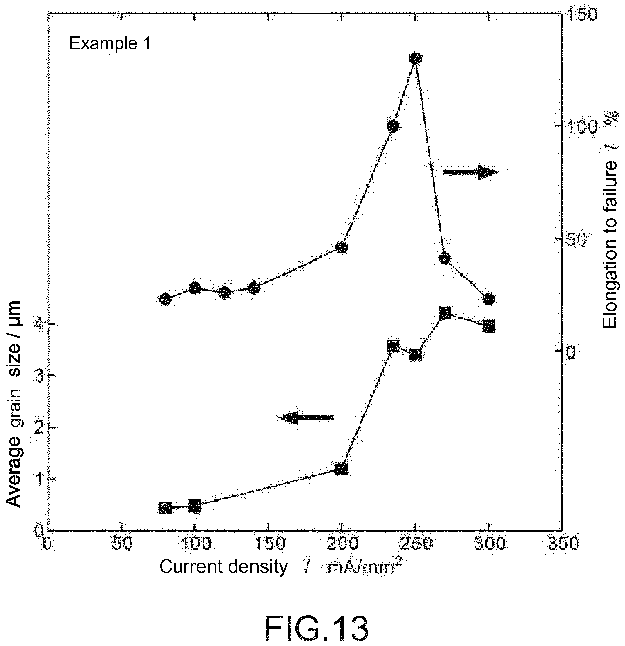

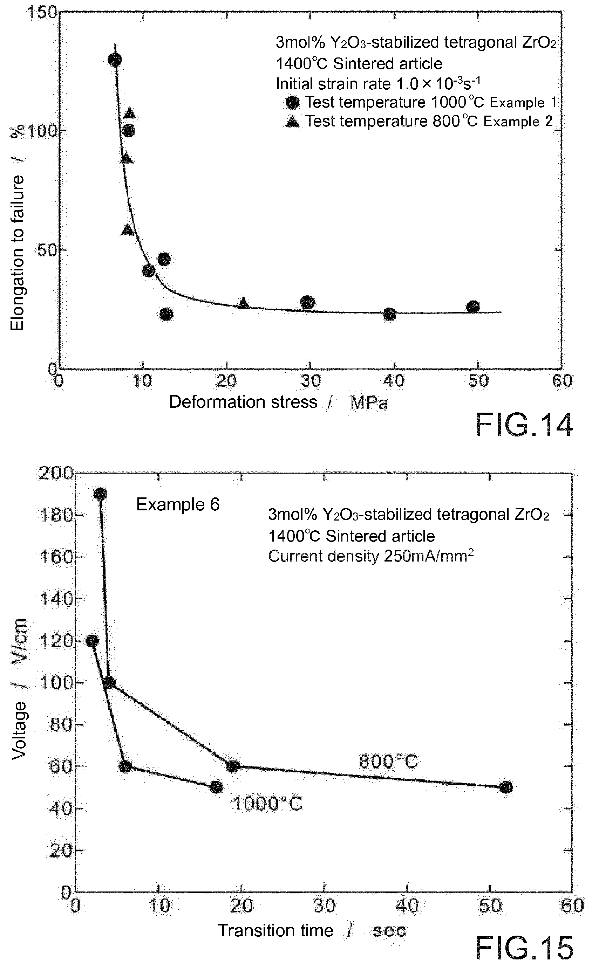

The relationship between nominal strain and a deformation stress of the tensile specimen in each current density and strain rate was examined. Here, the values of the current density and the voltage were controlled so that the stress to be applied to the specimen was constant. The results are shown in Fig. 5 and Fig. 6. The state before the tensile test was observed. The results are shown in Fig. 10. The relationship between the nominal strain, the current, and the voltage was examined. The results are shown in Fig. 12. The relationship between the current density, and an average grain diameter and elongation to failure of the tensile specimen after the test was examined. The results are shown in Fig. 13. The relationship between the deformation stress and the elongation to failure was examined. The results are shown in Fig. 14.

### [Example 2]

In Example 2, the same 3mol% Y₂O₃-stabilized tetragonal ZrO₂ polycrystalline body as that in Example 1 was used, and deformation processing was performed in the atmosphere with the heating temperature of 800°C, various current densities (160, 220, 235, 250, and 270 mA/mm²), an initial voltage of 190 V/cm, and a strain rate of 1.0×10⁻³s⁻¹. Other than that, it was the same as in Example 1.

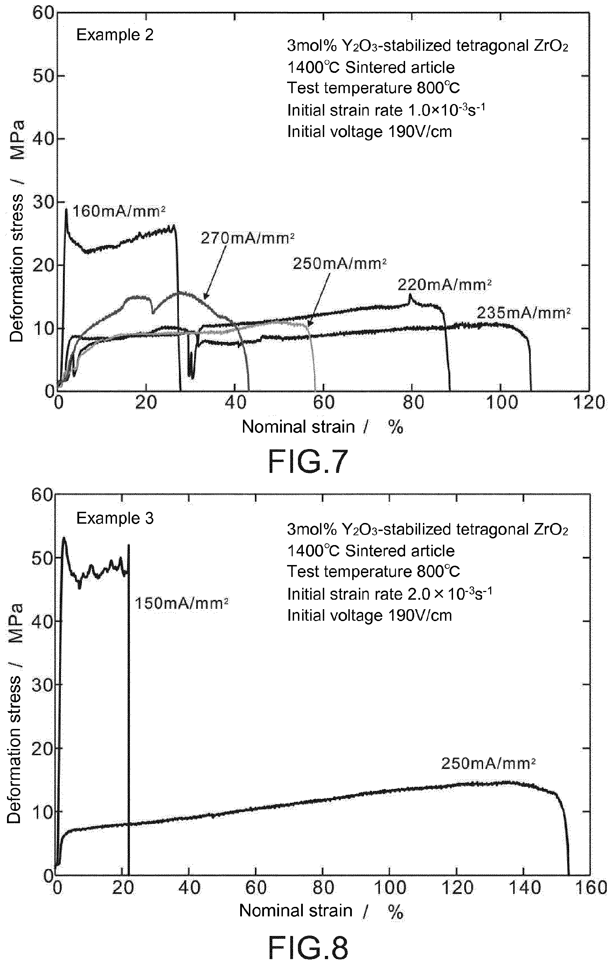

The relationship between nominal strain and a deformation stress of a tensile specimen in each current density and strain rate was examined. The results are shown in Fig. 7. The relationship between a deformation stress and elongation to failure was examined. The results are shown in Fig. 14.

### [Example 3]

In Example 3, the same 3mol% Y₂O₃-stabilized tetragonal ZrO₂ polycrystalline body as that in Example 1 was used, and deformation processing was performed in the atmosphere with the heating temperature of 800°C, various current densities (150 and 250 mA/mm₂), an initial voltage of 190 V/cm, and a strain rate of 2.0×10⁻³s⁻¹. Other than that, it was the same as in Example 1.

The relationship between nominal strain and a deformation stress of a tensile specimen in each current density and strain rate was examined. The results are shown in Fig. 8.

### [Comparative Example 4]

In Comparative Example 4, the same 3mol% Y₂O₃-stabilized tetragonal ZrO₂ polycrystalline body as that in Example 1 was used, and deformation processing was performed in the atmosphere with the heating temperature of 1000°C without applying a voltage. The relationship between nominal strain and a deformation stress of a tensile specimen was examined. The results are shown in Fig. 9.

### [Comparative Example 5]

In Comparative Example 5, the same 3mol% Y₂O₃-stabilized tetragonal ZrO₂ polycrystalline body as that in Example 1 was used, and deformation processing was performed in the atmosphere with the heating temperature of 700°C, a current density of 235 mA/mm², an initial voltage of 270 V/cm, and a strain rate of 1.0×10⁻³s⁻¹. Other than that, it was the same as in Example 1. The state after the tensile test was observed. The results are shown in Fig. 11.

### [Example 6]

In Example 6, the same 3mol% Y₂O₃-stabilized tetragonal ZrO₂ polycrystalline body as that in Example 1 was used and cut out into a rod shape (section of 2.2×2.2 mm², length of approximately 30 mm), and platinum wires (Pt wire) were attached thereto at intervals of 20 mm, which makes it possible to apply a voltage. The specimen having a rod shape was placed on an electric furnace and heated to 800°C and 1000°C, and various voltages were applied thereto. After applying the voltage, the time until the current value reaches 250 mA/mm² (time until it becomes an atomic diffusion self-accelerated state) was examined. The results are shown in Fig. 15.

For the sake of simplicity, the experimental conditions (deformation processing conditions) of Examples/Comparative Examples 1 to 6 are shown in Table 1, and the results will be described.

[Table 1]

**Table 1: Deformation processing conditions of ceramics according to Examples/Comparative Examples 1 to 6**

| Example/ Comparative Example | Ceramic | Heating temperature (°C) | Atmosphere | Current density (mA/mm²) | Initial voltage (V/cm) | Strain rate (s⁻¹) |
|---|---|---|---|---|---|---|
| Example1 | 3mol% Y₂O₃-stabilized tetragonal ZrO₂ polycrystalline body | 1000 | Atmosphere | 80,100,200,235,250,270,300 | 120 | 1.0×10⁻³,2.0×10⁻³ |
| Example2 | 3mol% Y₂O₃-stabilized tetragonal ZrO₂ polycrystalline body | 800 | Atmosphere | 150,220,235,250,270 | 190 | 1.0×10³ |
| Example3 | 3mol% Y₂O₃-stabilized tetragonal ZrO₂ polycrystalline body | 800 | Atmosphere | 150,250 | 190 | 2.0×10⁻³ |
| Comparative Example4 | 3mol% Y₂O₃-stabilized tetragonal ZrO₂ polycrystalline body | 1000 | Atmosphere | - | - | 1.0×10⁻³ |
| Comparative Example5 | 3mol% Y₂O₃-stabilized tetragonal ZrO₂ polycrystalline body | 700 | Atmosphere | 235 | 270 | 1.0×10⁻³ |
| Example6 | 3mol% Y₂O₃-stabilized tetragonal ZrO₂ polycrystalline body | 800,1000 | Atmosphere | 250 | 50,60,100,120,190 | - |

Fig. 5 is a diagram showing a relationship between nominal strain and a deformation stress (stress-strain curve) at the time of performing a tensile test (strain rate of 1.0×10⁻³s⁻¹) by Example 1.

Fig. 6 is a diagram showing another relationship between nominal strain and a deformation stress (stress-strain curve) at the time of performing a tensile test (strain rate of 2.0×10⁻³s⁻¹) by Example 1.

Fig. 7 is a diagram showing a relationship (stress-strain curve) between nominal strain and a deformation stress at the time of performing a tensile test by Example 2.

Fig. 8 is a diagram showing a relationship (stress-strain curve) between nominal strain and a deformation stress at the time of performing a tensile test by Example 3.

Fig. 9 is a diagram showing a relationship (stress-strain curve) between nominal strain and a deformation stress at the time of performing a tensile test by Comparative Example 4.

In accordance with Fig. 5 to Fig. 8, it was found that nominal strain (referred to also as break strain) of not less than 20% was confirmed under all conditions and plastic deformation (deformation processing) has occurred. Meanwhile, in accordance with Fig. 9, in the case where no voltage was applied, a deformation stress sharply increased, a stress close to 250 MPa was shown, and then, it broke without substantial deformation. Further, although not shown, also in the result of the tensile test of Comparative Example 4, it broke without substantial deformation similarly to Fig. 9. From this fact, it was shown that the method according to the present invention shown in Fig. 1 was more effective for deformation processing of a ceramic, and the heating temperature only needed to be more than 700°C and not more than 1400°C.

Further, in accordance with Fig. 5 to Fig. 8, plastic deformation was confirmed under any of conditions of 120 V/cm and 190 V/cm. Therefore, it was shown that the direct current electric field to a ceramic satisfied the range of not less than 50 V/cm and not more than 1500 V/cm, and was favorably in the range of not less than 100 V/cm and not more than 200 V/cm. In accordance with Fig. 5 to Fig. 8, it was found that the current density to the ceramic satisfied the range of not less than 100 mA/mm² and not more than 300 mA/mm².

The results were examined in more detail. In accordance with Fig. 5, Fig. 7, and Fig. 8, it was shown that the deformation behavior depended on the current density, and large elongation to failure, i.e., nominal strain of not less than 40% was favorably shown with a low deformation stress of not more than 15 MPa as long as the current density was within the range of not less than 200 mA/mm² and not more than 270 mA/mm². This suggests that the atomic diffusion self-acceleration effect is high in the above-mentioned current density. Surprisingly, in accordance with Fig. 5, nominal strain of 135% was achieved with a low deformation stress of not more than 12 MPa when the current density was 250 mA/mm² in Example 1. In accordance with Fig. 7, nominal strain of 107% was achieved with a low deformation stress of not more than 11 MPa when the current density was 235 mA/mm² in Example 2 in which the heating temperature was lower than that in Example 1. In accordance with Fig. 8, in Example 3, nominal strain of 154% was achieved with a low deformation stress of not more than 8 MPa when the current density was 250 mA/mm². In addition, in accordance with Fig. 5, Fig. 7, and Fig. 8, it was shown that deformation processing can be easily performed on a ceramic with a low deformation stress even at the heating temperature of not less than 800°C and not more than 1000°C.

In accordance with Fig. 6, break strain of 135% was shown with a strain rate of 1.0×10⁻³s⁻¹, and break strain of 145% was shown with a strain rate of 2.0×10⁻³s⁻¹. From this fact, it was found that larger-deformation processing could be performed with a low deformation stress of not more than 17 MPa even in the case where the strain rate doubled.

Fig. 10 is a diagram showing a state of a specimen before and after a tensile test by Example 1.

Fig. 11 is a diagram showing a state of a specimen after a tensile test by Comparative Example 5.

The results of the tensile test performed on the tensile specimen with the heating temperature of 1000°C, the current density of 250 mA/mm², and the strain rate of 1.0×10⁻³s⁻¹ in Example 1 are shown in Fig. 10. It was found that it was plastically deformed (nominal strain of 135%) uniformly throughout the gauge part of the specimen. Note that although not shown, it was confirmed that uniform plastic deformation was similarly shown in also the specimen on which a tensile test was performed under another condition. From this fact, it was shown that the method according to the present invention shown in Fig. 1 was advantageous for deformation processing.

The result of the tensile test performed on the tensile specimen with the heating temperature of 700°C, the current density of 235 mA/mm², and the strain rate of 1.0×10⁻³s⁻¹ in Comparative Example 5 is shown in Fig. 11. In accordance with Fig. 11, in the case where the heating temperature is lowered to 700°C, it was substantially not plastically deformed. From this fact, it was shown that the heating temperature needed to be higher than 700°C in the method according to the present invention shown in Fig. 1.

In accordance with the above-mentioned Fig. 5 to Fig. 11, it was shown that although it was known that it was more difficult to perform deformation processing as the heating temperature was lower and the deformation rate was higher in the existing technology for performing deformation processing on a superplastic ceramic typified by, for example, Patent Literature 1, it was extremely advantageous to employ the method according to the present invention shown in Fig. 1 because deformation processing could be performed at a high deformation rate of 2.0×10⁻³s⁻¹ even at a low heating temperature of approximately 800 to 1000°C.

Fig. 12 is a diagram showing a current density and a change in a voltage at the time of performing a tensile test by Example 1.

In Fig. 12, the results of the tensile test performed with the heating temperature of 1000°C, the initial voltage of 120 V/cm, the current density of 250 mA/mm², and the strain rate of 1.0×10⁻³s⁻¹ are shown. In accordance with Fig. 12, the electrical conductivity of the specimen (Y-TZP sintered body) heated to 1000°C, to which a voltage is applied, was calculated as 7.8×10¹ Ω⁻¹m⁻¹.

The specimen is a Y-TZP sintered body, as described above. It is known that this material gradually takes ion conductivity from a temperature of not less than 400°C. It is reported that the electrical conductivity thereof is 6.3×10⁰ Ω⁻¹m⁻¹ at 1000°C (see, for example, M.T.Colomer, et al., J.Solid State.Chem.,Vol.165,2002,pp.79-88).

Meanwhile, under a high voltage, it is presumed that electric charges accompanied by point defect are generated and a self-temperature-rise inside the Y-TZP due to Joule heat occurs with the increase in apparent electrical conductivity. As a result, it is presumed that it became a state in which atomic diffusion was self-accelerated much faster than the normal atomic diffusion determined by the temperature, thereby achieving plastic deformation as described above. This is also supported by that fact that the electrical conductivity is increased by 12 times more than the value in Literature. Note that although not shown, an increase in the electrical conductivity was confirmed similarly in other specimens in Example 1 and Example 2.

Fig. 13 is a diagram showing a relationship between elongation to failure and an average grain diameter with respect to a current density at the time of performing a tensile test by Example 1.

In Fig. 13, the results of the tensile test performed with the heating temperature of 1000°C, the initial voltage of 120 V/cm, various current densities, and the strain rate of 1.0×10⁻³s⁻¹ in Example 1 are shown. The elongation to failure is synonymous with nominal strain. It was obtained on the basis of Fig. 5. The average grain diameter was calculated by the line segment method in which an arbitrary line segment was drawn to the sample image obtained by the scanning electron microscope and the average grain diameter was defined as the average value of the (several hundreds) lengths of the line segments cut by grains multiplied by n/2 after completion of the tensile test.

In accordance with Fig. 13, it was found that the average grain diameter increased as the current density increased. This fact represents that the higher the current density, the higher the atomic diffusion self-acceleration effect. However, the elongation to failure dramatically increased when the current density exceeded 200 mA/mm², showed a peak with the current density of 250 mA/mm², and abruptly decreased when the current density exceeded 270 mA/mm².

This fact suggests that the atomic diffusion self-acceleration makes it easy to perform deformation processing on a ceramic but in the case where the current density is too large, excessive coarsening of grain size hinders the deformation processing. From this fact, it was also shown that it was favorable to apply a current density in the range of not less than 200 mA/mm² and not more than 270 mA/mm² to a ceramic.

Fig. 14 is a diagram showing a relationship between a deformation stress and elongation to failure at the time of performing tensile tests by Example 1 and Example 2.

In Fig. 14, the results of the tensile test performed with the heating temperature of 1000°C, the initial voltage of 120 V/cm, various current densities, and the strain rate of 1.0×10⁻³s⁻¹ in Example 1, and the results of the tensile test performed with the heating temperature of 800°C, the initial voltage of 190 V/cm, various current densities, and the strain rate of 1.0×10⁻³s⁻¹ in Example 2 are shown. The value of elongation to failure was obtained on the basis of Fig. 5 and Fig. 7.

In accordance with Fig. 14, the elongation to failure (nominal strain) was larger as the deformation stress was smaller, and remarkable elongation to failure was confirmed with the deformation stress within the range of not less than 5 MPa and not more than 15 MPa. The small deformation stress means that deformation processing can be more easily performed. Thus, it was confirmed that the method according to the present invention shown in Fig. 1 was advantageous as compared with the existing deformation processing technology.

Fig. 15 is a diagram showing a transition time until reaching an atomic diffusion self-accelerated state by Example 6.

In Example 6, after applying a voltage, if the current value increased to 250 mA/mm², it was determined that an atomic diffusion self-accelerated state was reached. On the basis of the results of Example 1, it is possible to reliably obtain plastic deformation with the current density of 250 mA/mm². Note that it is known that in the case where the atomic diffusion self-accelerated state is not reached, only a current of not more than 15 mA/mm² flows even when the temperature exceeds 1000°C, and no plastic deformation is obtained.

In accordance with Fig. 15, it was found that the atomic diffusion self-accelerated state was reached in a shorter time as the applied voltage was larger. In the case where the heating temperature was 800°C, it was found that the atomic diffusion self-accelerated state (here, reaching the current density of 250 mA/mm²) was reached in just a few seconds when the applied voltage was 190 V/cm and the atomic diffusion self-accelerated state was reached in approximately 60 seconds even when the applied voltage was 50 V/cm. In the case where the heating temperature was 1000°C, the atomic diffusion self-accelerated state was reached in a shorter time at a lower voltage as compared with the case of 800°C. For example, in the case where the heating temperature was 1000°C, the atomic diffusion self-accelerated state was reached in just a few seconds when the applied voltage was 120 V/cm, and the atomic diffusion self-accelerated state was reached in less than 20 seconds even when the applied voltage was 50 V/cm.

From this fact, the lower limit of the applied voltage is 50 V/cm. The upper limit is not particularly limited, but 1500 V/cm is appropriate considering discharge and the like. Further, when the application time of the voltage is more than zero second and not more than 60 seconds, the atomic diffusion self-accelerated state is reliably reached. It was shown that the atomic diffusion self-accelerated state could be reached in more than zero second not more than 20 seconds by controlling the heating temperature and the voltage.

### [Example 7]

In Example 7, as a ceramic, a three-phase (ZrO₂-30vol%, Al₂O₃-30vol%, MgAl₂O₄) composite ceramic material was used, and deformation processing was performed in the atmosphere with the heating temperature of 1000°C, the current density of 50 mA/mm², the initial voltage of 100 V/cm, and the strain rate of 1.0×10⁻²s⁻¹.

The three-phase composite ceramic material was obtained by weighing a 3mol% Y-TZP powder (manufactured by TOSOH CORPORATION, TZ-3Y grade), an Al₂O₃ powder (manufactured by TAIMEI CHEMICALS Co., Ltd., TM-DAR), and an MgO powder (manufactured by UBE INDUSTRIES,LTD., 100A) so that the atomic ratio of metal elements satisfiers the above-mentioned composition, press-molding and then sintering them in the atmosphere without pressurization for two hours at 1400°C. The relative density of the sintered body was not less than 95% (Archimedes method), and it was a dense body.

Similarly to Example 1, a tensile specimen was obtained from a sintered body by grinding processing. The specimen had a gauge part length of 12 mm and a cross-sectional dimension of 2.2×2.2 mm². In order to apply a voltage to the specimen, a hole of ϕ1 mm to 1.5 mm was opened, and a platinum wire (Pt wire) of ϕ1 mm to 1.5 mm was passed therethrough.

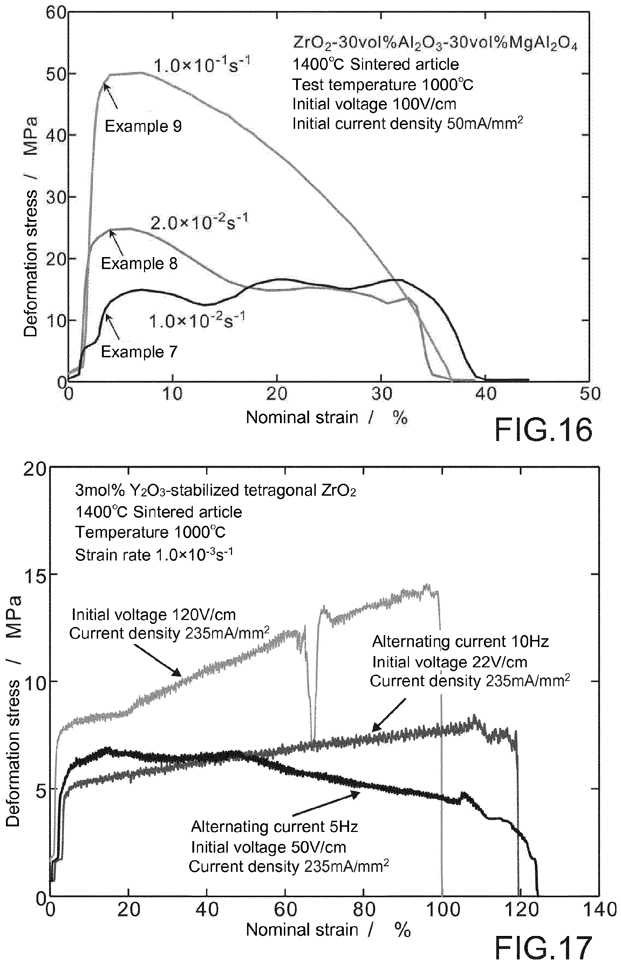

Using the deformation processing apparatus 400 shown in Fig. 4, a tensile test was performed similarly to Example 1. The results are shown in Fig. 16.

### [Example 8]

In Example 8, a tensile test was performed similarly to Example 6 except that the same three-phase composite ceramic material as that in Example 7 was used and deformation processing was performed with the strain rate of 2.0×10⁻²s⁻¹. The results are shown in Fig. 16.

### [Example 9]

In Example 9, a tensile test was performed similarly to Example 6 except that the same three-phase composite ceramic material as that in Example 7 was used and deformation processing was performed with the strain rate of 1.0×10-1s-1. The results are shown in Fig. 16.

For the sake of simplicity, the experimental conditions (deformation processing conditions) of Examples 7 to 9 are shown in Table 2, and the results will be described.

[Table 2]

**Table 2: Deformation processing conditions of ceramics according to Examples 7 to 9**

| Example | Ceramic | Heating temperature(°C) | Atmosphere | Current density(mA/mm²) | Initial voltage(V/cm) | Strain rate(s⁻¹) |
|---|---|---|---|---|---|---|
| Example7 | ZrO₂-30vol%Al₂O₃-30vol%MgAl₂O₄ | 1000 | Atmosphe re | 50 | 100 | 1.0×10⁻² |
| Example8 | ZrO₂-30vol%Al₂O₃-30vol%MgAl₂O₄ | 1000 | Atmosphere | 50 | 100 | 2.0×10⁻² |
| Example9 | ZrO₂-30vol%Al₂O₃-30vol%MgAl₂O₄ | 1000 | Atmosphere | 50 | 100 | 1.0×10⁻¹ |

Fig. 16 is a diagram showing a relationship (stress-strain curve) between nominal strain and a deformation stress at the time of performing tensile tests by Examples 7 to 9.

In accordance with Fig. 16, it was found that nominal strain of not less than 35% was confirmed under all conditions irrespective of the strain rate and plastic deformation occurred. In the case where the strain rate was 2.0×10⁻²s⁻¹, nominal strain (elongation to failure) of 44% was shown with a low deformation stress of not more than 25 MPa. From the results of Example 7 to 9 and the results of Examples 1 and 2, it was shown that the method according to the present invention shown in Fig. 1 was effective for deformation processing on an arbitrary ceramic material such as a three-phase composite ceramic material, in addition to a single-phase ceramic material.

### [Example 10]

In Example 10, the same 3mol% Y₂O₃-stabilized tetragonal ZrO₂ polycrystalline body as that in Example 1 was used, and deformation processing was performed in the atmosphere with the heating temperature of 1000°C, various initial voltages and frequencies (direct current of 120 V/cm, alternating current of 10 Hz-22 V/cm, alternating current of 5 Hz-50 V/cm), the current density of 235 mA/mm², and the strain rate of 1.0×10⁻³s⁻¹. Further, in the case of applying an alternating electric field, as the power source 440, an alternating current power source (manufactured by MATSUSADA PRECISION Inc., POP200-1.75) was used. Other than that, it was the same as in Example 1. The relationship between nominal strain and a deformation stress of the tensile specimen in various initial voltages and frequencies was examined. The results are shown in Fig. 17.

### [Example 11]

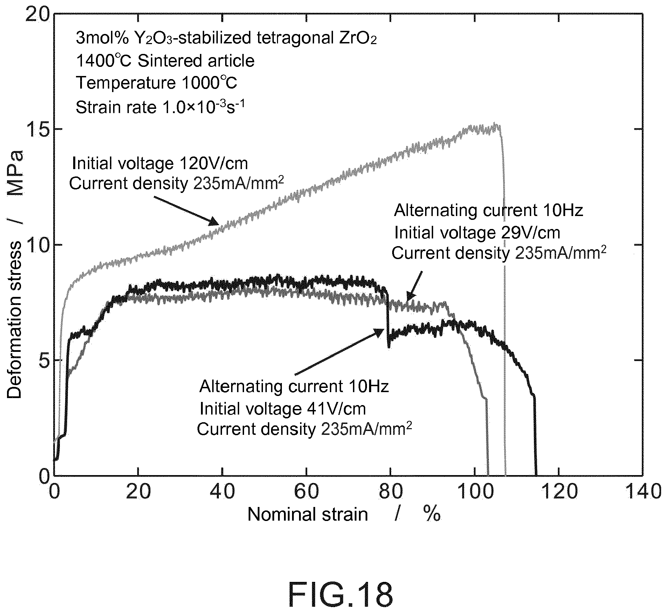

In Example 11, the same 3mol% Y₂O₃-stabilized tetragonal ZrO₂ polycrystalline body as that in Example 1 was used, and deformation processing was performed in the atmosphere with the heating temperature of 1000°C, various initial voltages (direct current of 120 V/cm, alternating current of 10 Hz-18 V/cm, alternating current of 10 Hz-29 V/cm, alternating current of 10 Hz-41 V/cm), the current density of 235 mA/mm², and the strain rate of 2.0×10⁻³s⁻¹. Further, in the case of applying an alternating electric field, as the power source 440, an alternating current power source similar to that in Example 10 was used. Other than that, it was the same as in Example 1. The relationship between nominal strain and a deformation stress of the tensile specimen in various initial voltages and frequencies was examined. The results are shown in Fig. 18.

Fig. 17 is a diagram showing a relationship (stress-strain curve) between nominal strain and a deformation stress at the time of performing a tensile test by Example 10.

Fig. 18 is a diagram showing a relationship (stress-strain curve) between nominal strain and a deformation stress at the time of performing a tensile test by Example 10.

In accordance with Fig. 17 and Fig. 18, it was found that nominal strain of not less than 100% was confirmed under all conditions and plastic deformation (deformation processing) occurred. Although not shown, it was confirmed that also in the case of applying an alternating current of 10 Hz-18 V/cm, behavior similar to that in the case of applying an alternating current of 10 Hz-29 V/cm was shown and plastic deformation occurred. Further, in the case of applying an alternating current voltage, the deformation stress was reduced as compared with the case of applying a direct current voltage, and break strain equal to or more than that in the case of applying a direct current voltage was shown. Further, it was found that in the case of applying an alternating current voltage, deformation processing could be performed even with an electric field smaller than the electric field of a direct current voltage. From this fact, it was shown that the method according to the present invention shown in Fig. 1 was effective for deformation processing on a ceramic even when using any of a direct current power source and an alternating current power source and applying an of a direct current voltage and an alternating current voltage.

### Industrial Applicability

Since deformation processing can be performed on a dense ceramic material at high speed under the operation condition at a temperature lower than that in the existing one by using the deformation processing method according to the present invention, it is favorable for industrial practical use. Further, since special technologies or special apparatuses are not required in deformation processing, it is possible to reduce the cost. The deformation processing method according to the present invention can be applied to an arbitrary ceramic material such as an oxide, a nitride, and an oxynitride, and thus is excellent in versatility.

### Reference Signs List

200, 400 deformation processing apparatus
210 ceramic
220, 420 stress application means
230, 430 heating means
240, 440 power source
410 tensile specimen
460 jig
470 load measuring device

## Claims

1. A method of performing deformation processing on a ceramic, comprising:
a step of heating the ceramic within a temperature range of more than 700°C and not more than 1400°C;
a step of applying a voltage to the heated ceramic; and
a step of applying a stress to the heated ceramic with a constant strain rate of not less than 1×10⁻³s⁻¹ and not more than 1×10⁻¹s⁻¹ to which the voltage has been applied,
wherein the step of applying a voltage includes applying a voltage while controlling a current density flowing through the ceramic by means of a control unit that controls at least the operation of power source to change the current and voltage in such a way that the stress to be applied to the ceramic by the step of applying a stress is constant, and
the step of applying a stress includes applying a stress selected from the group consisting of a tensile stress and a compressive stress to the ceramic.

2. The method according to claim 1, wherein
the step of heating includes heating the ceramic within a temperature range of not less than 800°C and not more than 1000°C.

3. The method according to claim 1 or 2, wherein
the step of applying a voltage includes applying a direct current electric field to the ceramic within a range of not less than 50 V/cm and not more than 1500 V/cm.

4. The method according to claim 3, wherein
the step of applying a voltage includes applying a direct current electric field to the ceramic within a range of not less than 100 V/cm and not more than 200 V/cm.

5. The method according to claim 1 or 2, wherein
the step of applying a voltage includes applying an alternating electric field to the ceramic within a range of not less than 15 V/cm and not more than 60 V/cm at a frequency within a range of not less than 3 Hz and not more than 20 Hz.

6. The method according to any one of claims 1 to 5, wherein
the step of applying a voltage includes applying a current density of not less than 200 mA/mm² and not more than 270 mA/mm² to the ceramic.

7. The method according to any one of claims 1 to 6, wherein
the ceramic is polycrystalline selected from the group consisting of an oxide, a nitride, a carbide, and an oxynitride having a grain size of not less than 100 nm and not more than 1 µm.

8. The method according to any one of claims 1 to 7, wherein
the step of applying a stress is performed after applying the voltage to the ceramic for more than zero second and not more than 60 seconds in the step of applying a voltage.

9. The method according to any one of claims 1 to 8, wherein
the step of applying a stress includes applying a deformation stress to the ceramic within a range of not less than 5 MPa and not more than 15 MPa.

## Patentansprüche

1. Verfahren zur Durchführung einer Verformungsbearbeitung an einer Keramik, umfassend:
einen Schritt des Erhitzens der Keramik in einem Temperaturbereich von mehr als 700°C und nicht mehr als 1400°C;
einen Schritt des Anlegens einer Spannung an die erwärmte Keramik; und
einen Schritt des Anlegens einer Spannung an die erhitzte Keramik mit einer konstanten Dehnungsrate von nicht weniger als 1×10⁻³s⁻¹ und nicht mehr
als 1×10-1s-1, an die die Spannung angelegt wurde,
wobei der Schritt des Anlegens einer Spannung das Anlegen einer Spannung umfasst,
während eine durch die Keramik fließende Stromdichte mittels einer Steuereinheit gesteuert wird, die zumindest den Betrieb der Energiequelle steuert,
um den Strom und die Spannung so zu ändern, dass die durch den Schritt des Anlegens einer Spannung an die Keramik anzulegende Spannung konstant ist, und
der Schritt des Anlegens einer Spannung das Anlegen einer Spannung, ausgewählt
aus der Gruppe bestehend aus einer Zugspannung und einer Druckspannung, an die Keramik umfasst.

2. Verfahren nach Anspruch 1, wobei
der Schritt des Erhitzens das Erhitzen der Keramik in einem Temperaturbereich von nicht weniger als 800°C und nicht mehr als 1000°C umfasst.

3. Verfahren nach Anspruch 1 oder 2, wobei
der Schritt des Anlegens einer Spannung das Anlegen eines elektrischen Gleichstromfeldes an die Keramik in einem Bereich von nicht weniger als 50 V/cm und nicht mehr als 1500 V/cm umfasst.

4. Verfahren nach Anspruch 3, wobei
der Schritt des Anlegens einer Spannung das Anlegen eines elektrischen Gleichstromfeldes an die Keramik innerhalb eines Bereiches von nicht weniger als 100 V/cm und nicht mehr als 200 V/cm umfasst.

5. Verfahren nach Anspruch 1 oder 2, wobei
der Schritt des Anlegens einer Spannung das Anlegen eines elektrischen Wechselfeldes an die Keramik in einem Bereich von nicht weniger als 15 V/cm und nicht mehr als 60 V/cm bei einer Frequenz in einem Bereich von nicht weniger als 3 Hz und nicht mehr als 20 Hz umfasst.

6. Verfahren nach einem der Ansprüche 1 bis 5, wobei der Schritt des Anlegens einer Spannung das Anlegen einer Stromdichte von nicht weniger als 200 mA/mm2 und nicht mehr als 270 mA/mm2 an die Keramik umfasst.

7. Verfahren nach einem der Ansprüche 1 bis 6, wobei die Keramik polykristallin ist, ausgewählt aus der Gruppe bestehend aus einem Oxid, einem Nitrid, einem Karbid und einem Oxyrid mit einer Korngröße von nicht weniger als 100 nm und nicht mehr als 1 µm.

8. Verfahren nach einem der Ansprüche 1 bis 7, wobei der Schritt des Anlegens einer Spannung nach dem Anlegen der Spannung an die Keramik für mehr als null Sekunden und nicht mehr als 60 Sekunden im Schritt des Anlegens einer Spannung durchgeführt wird.

9. Verfahren nach einem der Ansprüche 1 bis 8, wobei der Schritt des Anlegens einer Spannung das Anlegen einer Verformungsspannung an die Keramik in einem Bereich von nicht weniger als 5 MPa und nicht mehr als 15 MPa umfasst.

## Revendications

1. Procédé pour effectuer un traitement de déformation sur une céramique, comprenant :
une étape de chauffage de la céramique dans une plage de température supérieure à 700°C et non supérieure à 1400°C;
une étape d'application d'une tension à la céramique chauffée ; et
une étape consistant à appliquer une contrainte à la céramique chauffée avec une vitesse de déformation constante non inférieure à 1×10⁻³s⁻¹ et non
supérieure à 1×10-1s-1 à laquelle la tension a été appliquée,
dans lequel l'étape d'application d'une tension comprend l'application d'une tension tout
en contrôlant une densité de courant circulant à travers la céramique au moyen d'une unité de commande qui contrôle au moins le fonctionnement de la source d'alimentation pour changer le courant et la tension de telle manière que la contrainte à appliquer à la céramique par l'étape d'application
d'une contrainte est constante, et
l'étape d'application d'une contrainte comprend l'application d'une contrainte choisie
dans le groupe constitué par une contrainte de traction et une contrainte de compression à la céramique.

2. Procédé selon la revendication 1, dans lequel l'étape de chauffage comprend le chauffage de la céramique dans une plage de température non inférieure à 800°C et non supérieure à 1000°C.

3. Procédé selon la revendication 1 ou 2, dans lequel l'étape d'application d'une tension comprend l'application d'un champ électrique à courant di-rect à la céramique dans une gamme de pas moins de 50 V/cm et pas plus de 1500 V/cm.

4. Procédé selon la revendication 3, dans lequel l'étape d'application d'une tension comprend l'application d'un champ électrique à courant di-rectal à la céramique dans une gamme de pas moins de 100 V/cm et pas plus de 200 V/cm.

5. Procédé selon la revendication 1 ou 2, dans lequel l'étape d'application d'une tension comprend l'application d'un champ électrique alternatif à la céramique dans une gamme de pas moins de 15 V/cm et pas plus de 60 V/cm à une fréquence dans une gamme de pas moins de 3 Hz et pas plus de 20 Hz.

6. Procédé selon l'une quelconque des revendications 1 à 5, dans lequel l'étape d'application d'une tension comprend l'application d'une densité de courant non inférieure à 200 mA/mm2 et non supérieure à 270 mA/mm2 à la céramique.

7. Procédé selon l'une quelconque des revendications 1 à 6, dans lequel la céramique est polycristalline choisie dans le groupe constitué d'un oxyde, d'un nitrure, d'un carbure et d'un oxyni-tride ayant une taille de grain non inférieure à 100 nm et non supérieure à 1 µm.

8. Procédé selon l'une quelconque des revendications 1 à 7, dans lequel. l'étape d'application d'une contrainte est réalisée après avoir appliqué la tension à la céramique pendant plus de zéro seconde et pas plus de 60 secondes dans l'étape d'application d'une tension.

9. Procédé selon l'une quelconque des revendications 1 à 8, dans lequel l'étape d'application d'une contrainte comprend l'application d'une contrainte de déformation à la céramique dans une plage de pas moins de 5 MPa et pas plus de 15 MPa.
